(19) Europäisches Patentamt / European Patent Office / Office européen des brevets

(11) **EP 2 759 959 A2**

(12) **EUROPEAN PATENT APPLICATION**

(43) Date of publication:
30.07.2014 Bulletin 2014/31

(51) Int Cl.:
*G06K 9/00* (2006.01)  *G06K 9/46* (2006.01)

(21) Application number: 14151990.0

(22) Date of filing: 21.01.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 25.01.2013 CN 201310028959

(71) Applicant: Ricoh Company, Ltd.
Tokyo 143-8555 (JP)

(72) Inventors:
• He, Na
100044 Haidian District (CN)

• Hu, Ping
100044 Haidian District (CN)
• Shi, Zhongchao
100044 Haidian District (CN)
• Lu, Yaojie
100044 Haidian District (CN)
• Wang, Gang
100044 Haidian District (CN)

(74) Representative: Maury, Richard Philip
Marks & Clerk LLP
90 Long Acre
London
WC2E 9RA (GB)

(54) **Method and system for detecting multi-lanes**

(57) A method and a system for detecting a plurality of lanes based on a two-edge limitation are disclosed. The method includes picking up an image in front of a vehicle, and outputting a grayscale image; positioning a road region in the inputted grayscale image, and calculating a road grayscale value based on the road region; calculating angle distribution histograms of horizontal edges on two directions and an angle distribution histogram of a normal direction of pixels in the grayscale image with a grayscale value greater than the calculated road grayscale value; performing a matching of angles corresponding to peak values in the angle distribution histograms so as to obtain matched angles; and performing a straight line fitting for corresponding pixels based on the matched angles, and outputting the fitted straight line as the detected lane.

FIG.1

```
           START

S11 RECEIVING GRAYSCALE IMAGE

S12 CALCULATING ROAD
    GRAYSCALE VALUE

S13 CALCULATING A PLURALITY OF
    ANGLE DISTRIBUTION HISTOGRAMS

S14 PERFORMING ANGLE MATCHING
    AMONG DISTRIBUTION HISTOGRAMS

S15 PERFORMING STRAIGHT LINE
    FITTING BASED ON MATCHED ANGLE

S16 OUTPUTTING DETECTED ROAD

            END
```

EP 2 759 959 A2

## Description

## BACKGROUND OF THE INVENTION

### 1. Field of the Invention

The present invention relates to an image detection method, and specifically, a method and a system for detecting a plurality of traveling lanes of a vehicle.

### 2. Description of the Related Art

With the application of the vehicle, the vehicle is required to provide more functions of driving assistance. For the driving assistance functions of the vehicle, it is important to identify various objects on a road. Such identification includes identification of lanes within the road. Recently, the automatic driving has become more popular in science and industry, and the automatic driving is a basic component of the automatic detection of the lane. Usually, the lane detection means detection of a lane line edge on a road surface, and is very important for the automatic driving system. As conventional lane detection algorithms, the methods such as the Hough transform, the straight line approximation, the curve detection based on the simulated annealing algorithm, the correlation detection and the inverse perspective mapping, are provided.

In U.S. patent document US7646890B2, an image processing method for the automatic driving is disclosed. In such method, a position of a traffic lane line is detected by determining an edge of the traffic lane line, calculating a distance distribution of an edge intensity corresponding to the traffic lane line and calculating a degree of reliability of detection of the traffic lane line; therefore, a position of a traffic lane is detected from a captured image. However, in this method, it is necessary to perform a vehicle positioning so as to have a road region in the image, obtain edge points by analyzing the edge intensity distribution of rows and calculate the reliability degree by calculating the distance distribution. Such a process is very complicated and the computational complexity is large.

In U.S. patent document US7583816B2, a lane detection method in which the title of the invention is "Device for detecting a road traveling lane using an edge histogram" is disclosed. In this method, an edge histogram is produced by detecting edge points, so that a traveling lane is detected by determining a blocking marking line, detecting an edge of a lane and determining the position of the lane. However, such method merely discloses that a vertical edge histogram is produced based on horizontal edge points, and the combination of the contributions of plus edges and minus edges in the vertical edge histogram is analyzed.

Furthermore, as a conventional technology in the article of "A Machine Vision System for Lane-Departure Detection (Computer Vision and Image Understanding 86, 52-78 (2002))", a method for estimating deviation of a vehicle traveling lane on the road based by a specific machine vision system is also disclosed. This system uses edge information to define an edge distribution function (EDF), namely, an edge intensity histogram corresponding to edge direction angles. The EDF correlates edge correlation information and lane correlation information. In this article, the edge directions of 0 to 180 degrees are calculated, and it is determined that the angle corresponding to a peak value in the edge distribution histogram is the direction of the lane.

## SUMMARY OF THE INVENTION

Usually, in the above conventional lane detection method, only a current lane can be detected, and various different types of lanes, specifically, complicated types of lanes such as those with three lines or horizontal broken lines cannot be detected. For complicated types of lanes, the vehicle traveling lanes cannot be accurately detected by a conventional lane detection method such as a method based on a Hough transform, since it is difficult to determine edge points of the lanes. The conventional lane detection method based on edge directions is easily affected by noise, since only edge directions of 0 to 180 degrees are calculated. Therefore, it is one of objects of the present invention to provide a method for detecting a plurality of lanes based on a two-edge limitation. In this method, edge points of a lane can be selected based on edge directions of pixels, after a white line direction is obtained by performing a matching of angles in histograms.

According to an aspect of the present invention, a method for detecting a plurality of lanes based on a two-edge limitation, comprises the steps of: picking up an image in front of a vehicle, and outputting a grayscale image; positioning a road region in the inputted grayscale image, and calculating a road grayscale value based on the road region; calculating angle distribution histograms of horizontal edges on two directions and an angle distribution histogram of a normal direction of pixels in the grayscale image with a grayscale value greater than the calculated road grayscale value; performing a matching of angles corresponding to peak values in the angle distribution histograms so as to obtain matched angles; and performing a straight line fitting for corresponding pixels based on the matched angles, and outputting the fitted straight line as the detected lane.

The step of calculating angle distribution histograms of horizontal edges on two directions of pixels in the grayscale image with a grayscale value greater than the calculated road grayscale value, may include the steps of determining an interest region from the grayscale image, and calculating a horizontal edge histogram of 0 to 180 degrees and a horizontal edge histogram of 180 to 360 degrees, for the pixels in the interest region with a grayscale value greater than the calculated road grayscale value.

The step of calculating the angle distribution histogram of the normal direction of pixels in the grayscale image with a grayscale value greater than the calculated road grayscale value, may include a step of calculating a grayscale difference histogram of 0 to 180 degrees of differences of pixels on both sides in the normal directions, for the pixels in the interest region with a grayscale value greater than the calculated road grayscale value.

The step of calculating the horizontal edges histogram of 0 to 180 degrees, may include calculating horizontal edge values and vertical edge values based on a Sobel operator, for the pixels in the interest region with a grayscale value greater than the calculated road grayscale value, calculating edge directions within 0 to 360 degrees for the pixels, accumulating the horizontal edge values of all of the pixels with the same edge direction angle, for each of the edge direction angles within 0 to 180 degrees, and generating the horizontal edge histogram of 0 to 180 degrees, for all of the pixels in the interest region with a grayscale value greater than the calculated road grayscale value.

The step of calculating the horizontal edge histogram of 180 to 360 degrees, may include calculating horizontal edge values and vertical edge values based on a Sobel operator, for the pixels in the interest region with a grayscale value greater than the calculated road grayscale value, calculating edge directions within 0 to 360 degrees for the pixels, accumulating the horizontal edge values of all of the pixels with the same edge direction angle, for each of the edge direction angles within 180 to 360 degrees, and generating the horizontal edge histogram of 180 to 360 degrees, for all of the pixels in the interest region with a grayscale value greater than the calculated road grayscale value.

The step of calculating a grayscale difference histogram of 0 to 180 degrees of differences of pixels on both sides in the normal directions for the pixels in the interest region with a grayscale value greater than the calculated road grayscale value, may include calculating horizontal edge values and vertical edge values based on a Sobel operator, for the pixels in the interest region with a grayscale value greater than the calculated road grayscale value, calculating edge directions within 0 to 360 degrees for the pixels, calculating grayscale differences of the normal directions perpendicular to the edge directions for the pixels, accumulating the grayscale differences of the normal directions of the pixels with the same edge direction, for each of the edge directions within 0 to 180 degrees and each of the directions of subtracting 180 degrees from the edge directions within 180 to 360 degrees, with respect to the pixels in the interest region with a grayscale value greater than the calculated road grayscale value, and generating the grayscale difference histogram of 0 to 180 degrees, for all of the pixels in the interest region with a grayscale value greater than the calculated road grayscale value.

The step of calculating the road grayscale value based on the road region, may include getting statistics of grayscale values of all of the pixels within the road region, and generating a grayscale histogram of the road region, and obtaining a grayscale value corresponding to a peak value of the grayscale histogram as the road grayscale value.

The step of performing the matching of the angles corresponding to the peak values in the angle distribution histograms so as to obtain the matched angles, may include calculating peak values of the angle distribution histograms of horizontal edges on two directions and the angle distribution histogram of the normal direction, obtaining angles corresponding to the peak values of the histograms, performing the matching of the values of the corresponding angles within a predetermined error range, and outputting the matched angles.

The step of performing the straight line fitting for the corresponding pixels based on the matched angles, may include retaining only pixels with an edge direction close to the matched angles, and obtaining a line segment closest to the matched angles from the retained pixels by a Hough transform.

According to another aspect of the present invention, a system for detecting a plurality of lanes based on a two-edge limitation, comprises: a grayscale image generation module configured to pick up an image in front of a vehicle, and output a grayscale image; a road grayscale value calculation module configured to position a road region in the inputted grayscale image, and calculate a road grayscale value based on the road region; an angle distribution histogram generation module configured to calculate angle distribution histograms of horizontal edges on two directions and an angle distribution histogram of a normal direction of pixels in the grayscale image with a grayscale value greater than the calculated road grayscale value; an angle matching module configured to perform a matching of angles corresponding to peak values in the angle distribution histograms so as to obtain matched angles; and a straight line fitting module configured to perform a straight line fitting for corresponding pixels based on the matched angles, and output the fitted straight line as the detected lane.

According to the method for detecting a plurality of lanes according to the present invention, the edge directions of 180 to 360 degrees are calculated, and the edge points and the matched angles can be obtained by analyzing the edge intensity distributions for angle directions; therefore, the direction of the lanes can be obtained more accurately. In the method according to an embodiment of the present invention, the matching of the angles of the peak values of a plus edge direction histogram, a minus edge direction histogram and a grayscale difference histogram is performed, so that, an accurate direction of the lane can be obtained by the matching of the peak values of the three histograms.

## BRIEF DESCRIPTION OF THE DRAWINGS

The invention has other objects, features, advantages, and technical and industrial importance, which will be more readily apparent from the following detailed description of the embodiments of the present invention, when taken in conjunction with the accompanying drawings.

FIG. 1 is a flowchart of the method for detecting the lanes according to an embodiment of the present invention;

FIG. 2 is a flowchart of calculating the road grayscale value according to the embodiment of the present invention;

FIGs. 3A and 3B are schematic drawings illustrating two conditions of the selected road region;

FIGs. 4A and 4B are schematic drawings illustrating the calculations of the grayscale histograms corresponding to the road regions illustrated in FIGs. 3A and 3B, respectively;

FIG. 5 is a flowchart of calculating the three angle distribution histograms of pixels according to the embodiment of the present invention;

FIG. 6 is a schematic drawing illustrating an example of the positioned interest region;

FIG. 7A to 7C illustrate three angle histograms calculated by the method according to the embodiment of the present invention, respectively;

FIG. 8 is a flowchart illustrating the calculation algorithm of the horizontal edge histogram of 0 to 180 degrees;

FIG. 9 is a flowchart illustrating the calculation algorithm of the horizontal edge histogram of 180 to 360 degrees;

FIG. 10 is a flowchart illustrating the calculation of the grayscale difference histogram of 0 to 180 degrees;

FIG. 11 is a flowchart of obtaining an angle of a white line from the image by performing the matching of the three histograms;

FIG. 12 is a schematic drawing illustrating the results produced by performing the matching of the angles of the three angle histograms illustrated in FIGs. 7A to 7C;

FIG. 13 is a flowchart of illustrating the straight line fitting based on the matched angle according to the embodiment of the present invention; and

FIG. 14 is a schematic drawing illustrating an example of the obtained result of the straight line fitting according to the embodiment of the present invention.

## DETAILED DESCRIPTION OF THE PREFERRED EMBODIMENTS

In the following, embodiments of the present invention are described in detail with reference to the accompanying drawings.

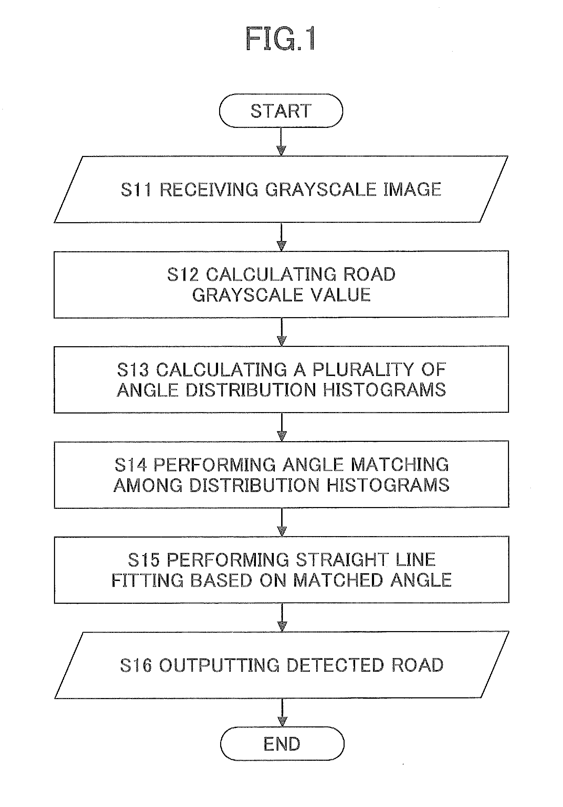

FIG. 1 is a flowchart of the method for detecting the lanes according to the present invention. The method according to the present invention is typically used in a vehicle, and the method for detecting the lanes is performed by an in-car computer. The images to be processed in the present invention are picked up by an in-car camera in real-time. Specifically, in the beginning of the lane detection method according to the present invention, an image in front of a vehicle is picked up by an in-car camera in real-time, and is converted into a grayscale image.

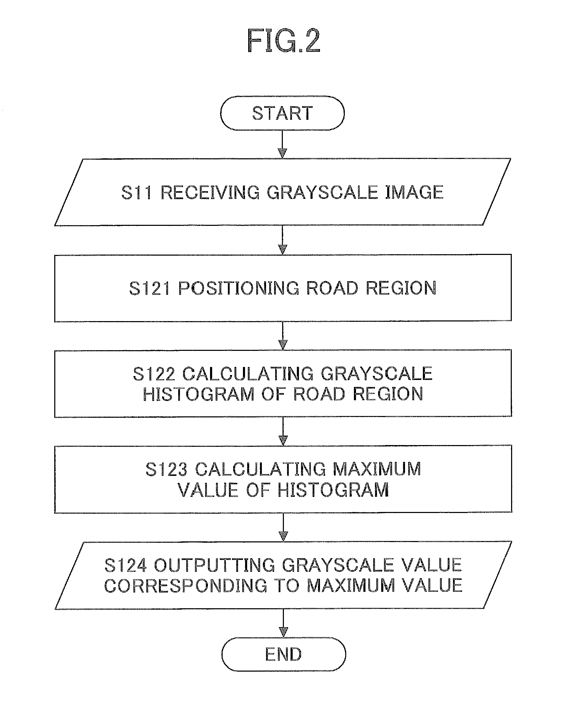

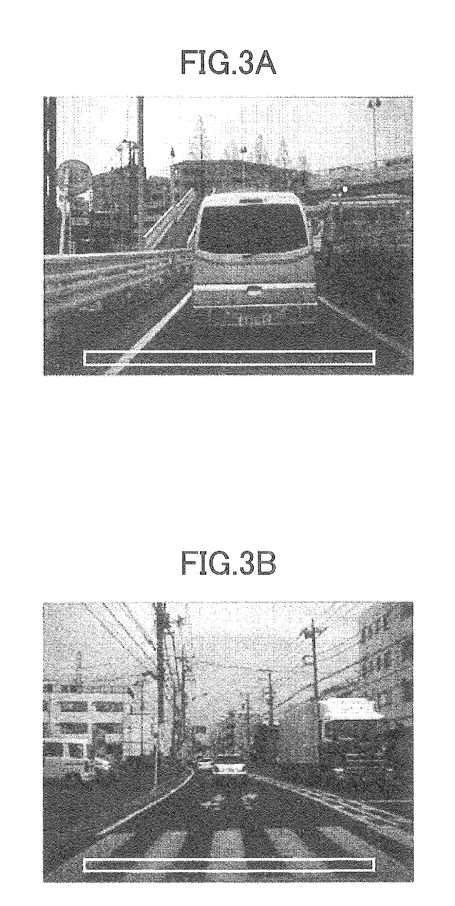

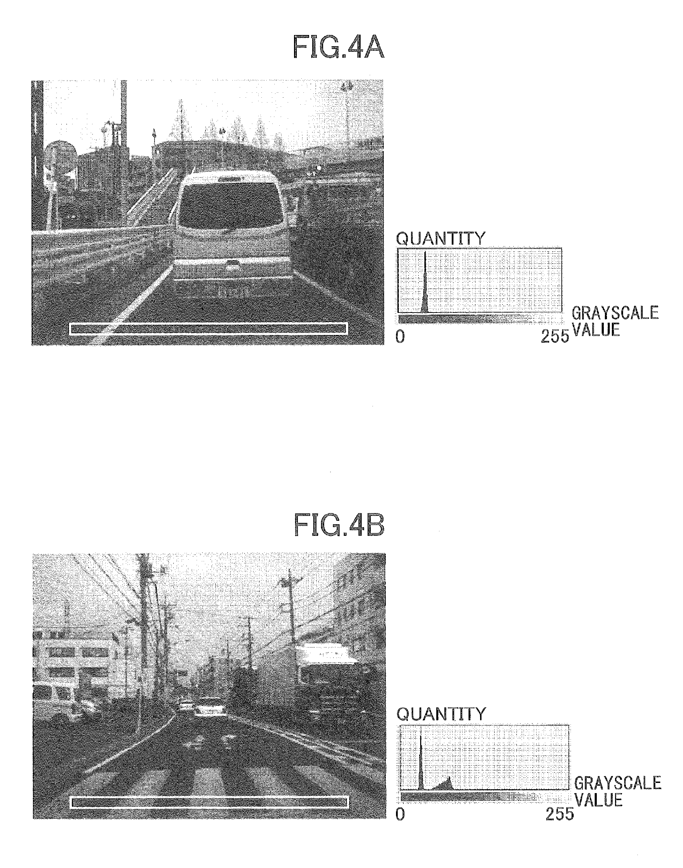

Accordingly, in step S11 of the lane detection method according to the present invention, the inputted grayscale image is received. In order to achieve an accurate detection of the lane, it is necessary to determine which portion of the inputted grayscale image is the road portion. Therefore, in step S12, a grayscale value of the road is calculated and outputted. FIG. 2 is a flowchart of calculating the road grayscale value according to the embodiment of the present invention. After the grayscale image is inputted in step S11, in step S121, a road region is positioned in the inputted grayscale image. As a matter of experience, in the image picked up by the in-car camera, the portion that is close to the bottom of the image may be the road portion. Therefore, the road region is positioned by selecting a region where is located at the bottom of the image. The width of the road region may be three fourths, four fifths, or one half of the width of the image. Since there is a certain distance between the vehicle where the in-car camera is located and a front vehicle, the selected region usually is a road region with a crosswalk region. In order to ensure selection of a road region with a road, a road region is selected so that the height thereof is a small value, such as 10 pixels, 15 pixels or 8 pixels. FIGs. 3A and 3B are schematic drawings illustrating two conditions of the selected road region. FIG. 3A illustrates the condition where the positioned road region includes only the road, and FIG. 3B illustrates the condition where the positioned road region includes a crosswalk region. After the road region is positioned, in S122, a grayscale histogram of the positioned road region is calculated. FIGS. 4A and 4B are schematic drawings illustrating the calculations of the grayscale histograms corresponding to the road regions illustrated in FIGs. 3A and 3B, respectively. As illustrated in FIG. 4A, for the selected road region including only the road, in the histogram at the right side of FIG. 4A, the grayscale value corresponding to the peak value is the road grayscale value. As illustrated in FIG. 4B, for the selected road region including the crosswalk, there are two peak values in the histogram at the right side of FIG. 4B. In the grayscale values corresponding to the two peak values, a small grayscale value is the road grayscale value, and a large grayscale value is the grayscale value of white lines. And then, in step S123, the peak value in the histogram is calculated. In step S124, the grayscale value corresponding to the calculated peak value is outputted as the road grayscale value. It can be determined which pixel points within the inputted grayscale image are the road and which pixel points are not the road, based on the outputted road grayscale value. As a result, the computational complexity of the subsequent detection can be reduced.

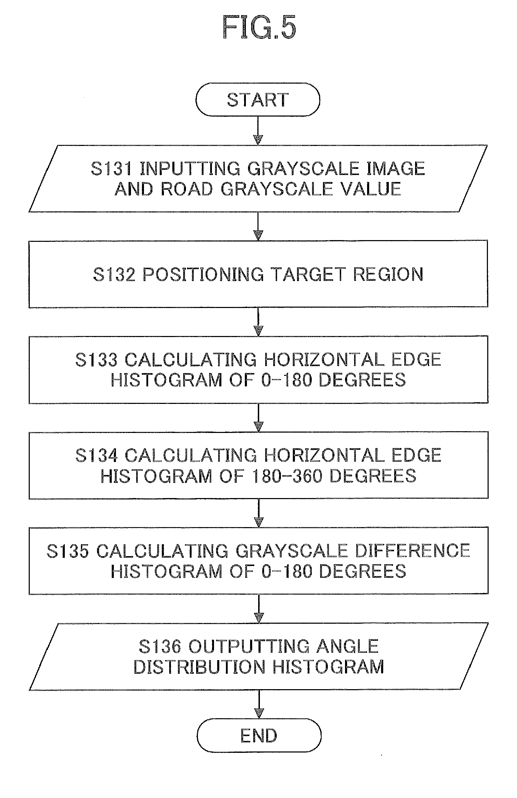

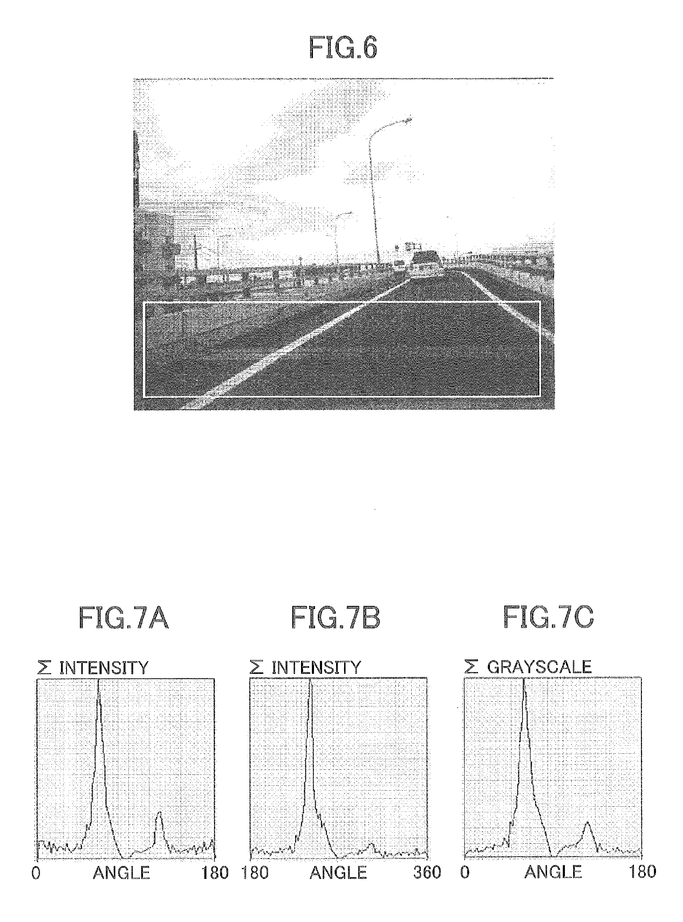

Returning to FIG. 1, after the road grayscale value is obtained in step S11, in step S12, three histograms of angle distribution of pixels in the road region are calculated. FIG. 5 is a flowchart of calculating the three angle distribution histograms of pixels according to the embodiment of the present invention. As illustrated in FIG. 5, in step S131, the grayscale image and the road grayscale value calculated above are received. In step S132, an interest region (a target region) is determined from the inputted grayscale image. FIG. 6 is a schematic drawing illustrating an example of the positioned interest region. In FIG. 6, a white rectangular box represents the positioned interest region. The interest region usually is located at the bottom of the image, and the width of the interest region is less than the width of the image, such as six sevenths or seven eighths of the width of the image. The height of the interest region is one third or three sevenths of the height of the image. Since the top portion of the image usually is the sky or other objects in the distance, and there is a certain distance between the own vehicle and the front vehicle; most of the interest region is an area that includes the road, and may also include a white line (if a white line exists).

After the interest region is determined, in steps S133 to S135, three angle values of pixels within the interest region are calculated, and three angle distribution histograms are produced. FIG. 7A to 7C illustrate three angle histograms calculated by the method according to the embodiment of the present invention, respectively.

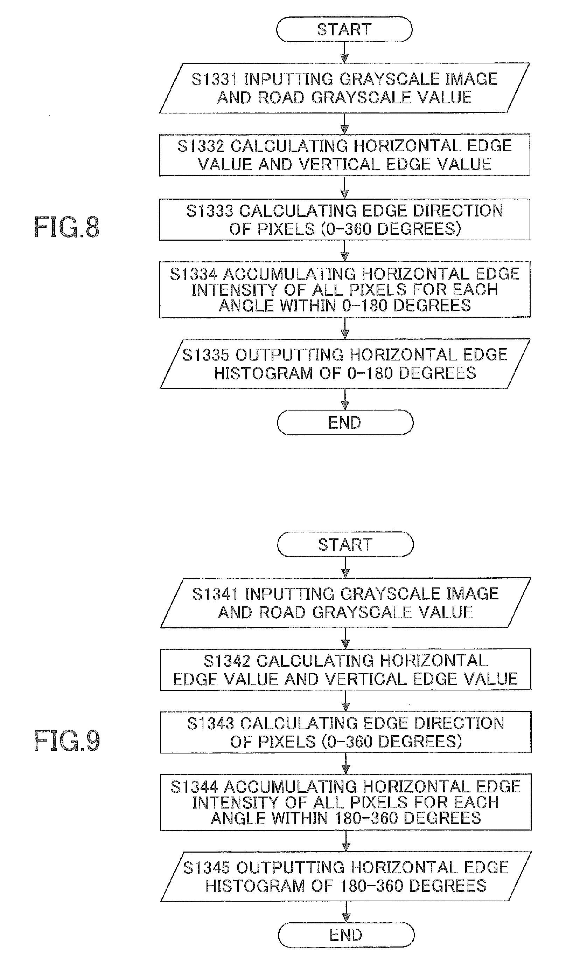

In step S133, for each of the pixels, a horizontal edge histogram within the range of 0 to 180 degrees is calculated. FIG. 8 is a flowchart illustrating the calculation algorithm of the horizontal edge histogram of 0 to 180 degrees. As illustrated in FIG. 8, in step S1331, the inputted grayscale image and the calculated road grayscale value are obtained. In step S1332, for all of the pixels with a grayscale value greater than the inputted road grayscale value, a horizontal edge detection and a vertical edge detection are performed based on a Sobel operator; and a horizontal edge value and a vertical edge value of other pixels are set to 0. The reason is that the grayscale value of a white line is greater that the grayscale value of the road, so that pixels with a grayscale value less than the inputted road grayscale value are not pixels of a white line; and these pixels may become noise points in the calculations of the edge histograms and affect the calculation result of the edge histograms. As a result, the computational efficiency is improved, by setting the edge values of these pixels to 0 and calculating only the edge values of the pixels with a grayscale value greater than the road grayscale value. After simplifying the grayscale image in step S1332, in step S1333, for the pixels with an edge value that is set to non-zero in the simplified grayscale image, the edge directions with the range of 0 to 360 degrees are calculated, by the following equation.

$$\theta = \arctan \frac{verEdge}{horEdge}$$

Where verEdge is the vertical edge intensity of the pixels with a non-zero edge value detected in step S1332, and horEdge is the horizontal edge intensity of the pixels with a non-zero edge value detected in step S1332. In step S1334, the horizontal edge values of the pixels of each of angles with 0 to 180 degrees are accumulated, that is, the intensity values of the pixels with the same angle are accumulated, and the horizontal edge distribution histogram of 0 to 180 degrees illustrated in FIG. 7A is obtained. As illustrated in FIG. 7A, in the horizontal edge histogram within 0 to 180 degrees, the abscissa is angle (0 to 180 degrees) and the ordinate is an accumulated value of the horizontal edge intensity for each of the angles.

Returning to FIG. 5, in step S134, similarly to step S133, for each of the pixels, a horizontal edge histogram within the range of 180 to 360 degrees is calculated. FIG. 9 is a flowchart illustrating the calculation algorithm of the horizontal edge histogram of 180 to 360 degrees. As illustrated in FIG. 9, steps S1341 to S1343 are identical with step S1331 to S1333 illustrated in FIG. 8, and the descriptions thereof are omitted. Of course, for improvement of the calculation speed and simplification of the process, the calculation result of step S1333 may be used in step S1343 directly, and then, the calculation of the statistic in step S1344 may be started directly. In step S1344, the horizontal edge values of the pixels of each of angles with 180 to 360 degrees are accumulated, that is, the intensity values of the pixels with the same angle are accumulated, and the horizontal edge distribution histogram of 180 to 360 degrees illustrated in FIG. 7B is obtained. As illustrated in FIG. 7B, in the horizontal edge histogram within 180 to 360 degrees, the abscissa is angle (180 to 360 degrees) and the ordinate is an accumulated value of the horizontal edge intensity for each of the angles.

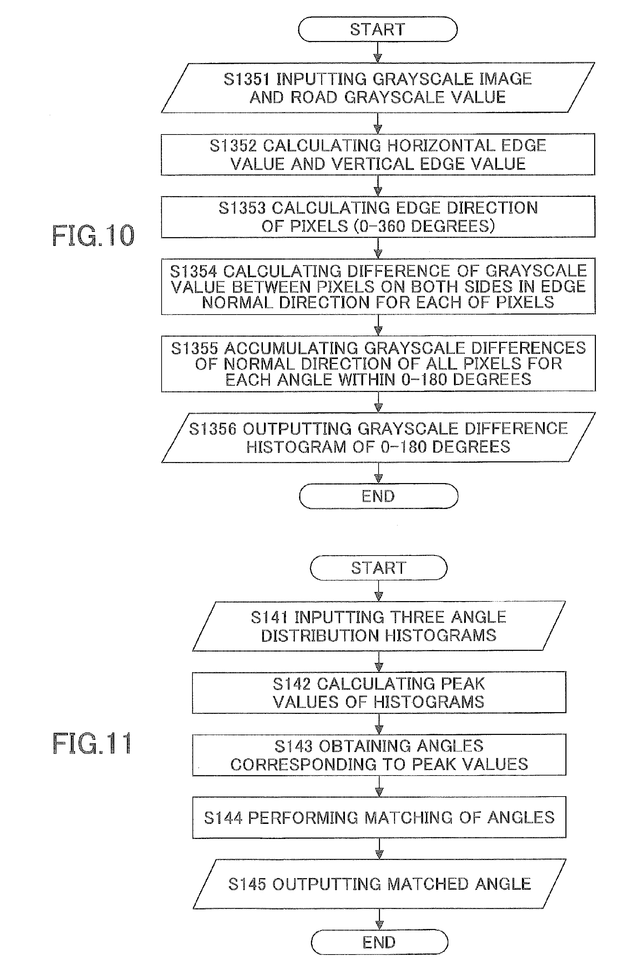

Returning to FIG. 5, in step S135, a grayscale difference histogram of 0 to 180 degrees of the pixels is calculated. FIG. 10 is a flowchart illustrating the calculation of the grayscale difference histogram of 0 to 180 degrees. In step 1351, the inputted grayscale image and the calculated road grayscale value are obtained. In step S1352, for all of the pixels with a grayscale value greater than the inputted road grayscale value, a horizontal edge detection and a vertical edge detection are performed based on a Sobel operator; and a horizontal edge value and a vertical edge value of other pixels are set to 0. In step S1353, the edge directions with the range of 0 to 360 degrees are calculated. The above steps are identical with step S1331 to S1333 illustrated in FIG. 8. In step S1354, for each of pixels, grayscale differences between pixels on both sides in an edge normal direction are calculated. For a pixel with a non-zero edge value, the edge normal direction is a direction perpendicular to the edge direction of the pixel. The grayscale difference of the normal direction is the difference of the grayscale values between the pixels on both sides in the normal direction. For an edge pixel of a white line, one side of the normal direction is a white line pixel, and the other side is a road pixel; therefore, the grayscale difference of them is large. In step S1355, for each of the edge directions within 0 to 180 degrees, the grayscale differences of the normal directions of the pixels with the same edge direction are accumulated; and, for each of the edge directions within 180 to 360 degrees, angles subtracting 180 degrees from the edge directions within 180 to 360 degrees are obtained, and the grayscale differences of the normal directions of the pixels with the same edge direction are also accumulated into the region of 0 to 180 degrees. At last, in step S1356, the grayscale difference histogram of 0 to 180 degrees illustrated in FIG. 7C is obtained. As illustrated in FIG. 7C, in the grayscale difference histogram within 0 to 180 degrees, the abscissa is angle (0 to 180 degrees) and the ordinate is an accumulated value of the grayscale differences for the normal direction of each of the angles.

Returning to FIG. 5, in step S136, namely step S13 illustrated in FIG. 1, the three angle distribution histograms illustrated in FIGs. 7A to 7C are outputted.

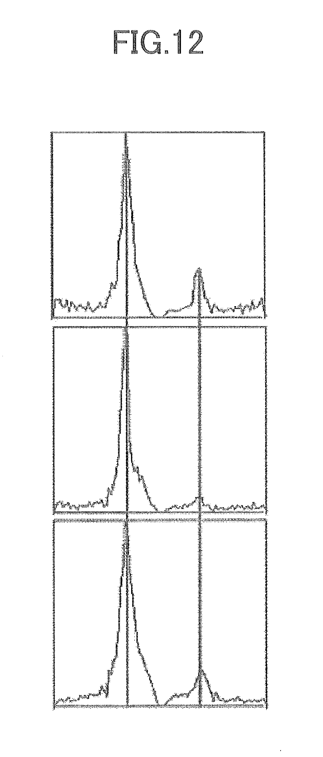

In step S14, a matching is performed based on the three histograms so as to obtain angles. FIG. 11 is a flowchart of obtaining an angle of a white line from the image by performing the matching of the three histograms. As illustrated in FIG. 11, in step S141, the three angle distribution histograms inputted in step S13 are received. In step S142, peak values of the histograms are calculated. In step S143, angles corresponding to the peak values in the histograms are obtained. In step S144, the matching of the angles is performed. Since horizontal edge values of edge points of a white line usually are greater than other pixel points; the edge directions of all of the left edge pixel points of the white line are coincident, the edge directions of all of the right edge pixel points of the white line are coincident, and the edge directions of the left and right edge pixel points are opposite. In the horizontal edge histogram of 0 to 180 degrees and the horizontal edge histogram of 180 to 360 degrees, the angle of the white line is/are one or a plurality of angle(s) corresponding to the peak value(s) of the histograms. For the same white line, the difference of the angles of the left and right edges is 180 degrees, so that the matching of the angles of the peak values of the two histograms can be performed; therefore, a more accurate angle of the white line can be obtained, and this is called "two-edge limitation" in the present invention. Moreover, there is a possibility that the angle obtained by performing the matching of the two histograms is the angle of another line on the road. To solve this problem, as illustrated in step S1354, since the grayscale differences of the normal direction of the edge pixel points of the white line is large, the angle of the white line also corresponds to the point with the peak value of the grayscale difference histogram. The angle obtained by performing the matching of the three histogram is regarded as the angle of the white line. The so-called angle matching of the peak values of the histograms means that: the angles corresponding to the peak values of the three histograms are compared, and when the difference of the angles is within a certain range, such as the range of 3 to 5 degrees, it is determined that the angle is one result angle of the histogram matching. In step S145, the matched angle is outputted. FIG. 12 is a schematic drawing illustrating the results produced by performing the matching of the angles of the three angle histograms illustrated in FIGs. 7A to 7C. As an example, it may be determined that the matching is successful when the difference of the angles corresponding to the peak values is within 0 to 5 degrees.

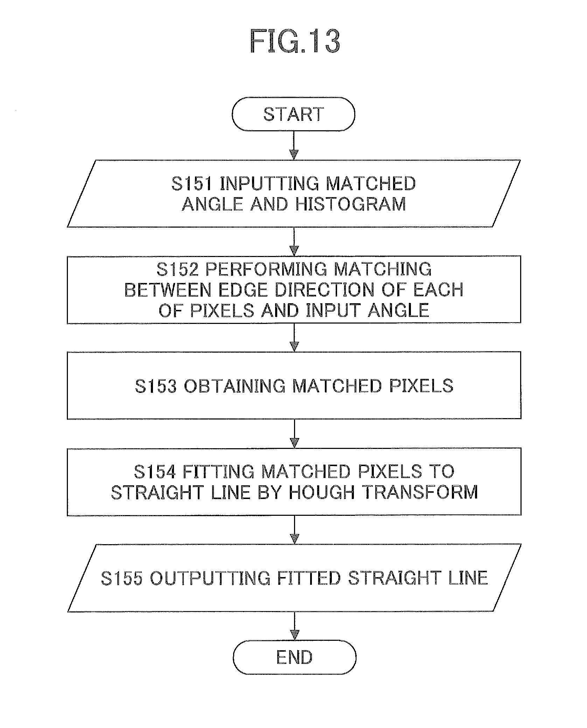

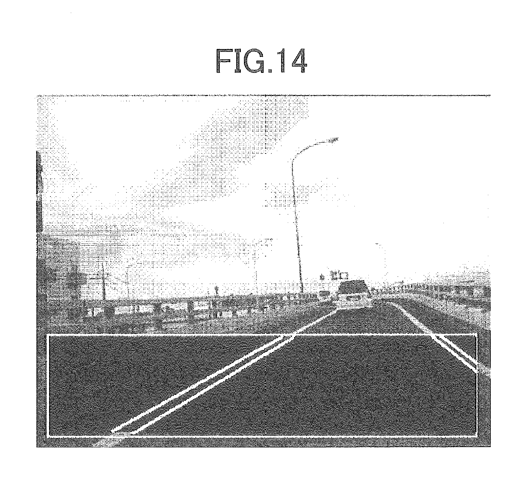

Returning to FIG. 1, in step S15, a straight line fitting is performed based on the matched angle, so that the final result of the lane detection is obtained. FIG. 13 is a flowchart of illustrating the straight line fitting based on the matched angle according to the embodiment of the present invention. As illustrated in FIG. 13, in step S151, the grayscale image and the matched angle inputted in step S14 are received. In step S152, a matching between the edge direction of each of the pixels and the inputted matched angle, is performed. If the difference between the edge direction value (horizontal direction and the normal direction) of the pixel and the inputted matched angle is small, for example, the difference is within 0 to 5 degrees, the pixel will be retained as a pixel on the edge line, otherwise, the pixel will not be retained. In step S153, all of the matched pixels are obtained, and in step S154, for these matched pixels, a straight line fitting of a Hough transform based on angles approximate to the matched angle are performed. Such fitting is a well-known technology in the art, therefore the description is omitted here. In step S155, the result of the fitted straight line is outputted. FIG. 14 is a schematic drawing illustrating an example of the obtained result of the straight line fitting according to the embodiment of the present invention.

The series of operations that are described in the specification may be performed by hardware, software or their combination. When the series of operations performed by software, computer program therein may be installed into a memory of a computer built in special hardware so that the computer program is executed by the computer. Alternatively, the computer program may be installed into a general-purpose computer capable of performing various types of operations so that the computer is executed by the computer.

For example, the computer program may be stored in recording medium such as a hard disk or a ROM (read-only memory) in advance. Alternatively, the computer program may be temporarily or permanently stored (recorded) in movable recording medium, such as floppy disk, CD-ROM (compact disc read-only memory), MO (magneto-optical) disc, DVD (digital versatile disc), magnetic disk or semiconductor memory. These movable recording media may be provided as package software.

The present invention is not limited to the specifically disclosed embodiments, and various modifications and replacements may be made without departing from the scope of the present invention.

**Claims**

1. A method for detecting a plurality of lanes based on a two-edge limitation, the method comprising the steps of:

   picking up an image in front of a vehicle, and outputting a grayscale image;
   positioning a road region in the inputted grayscale image, and calculating a road grayscale value based on the road region;
   calculating angle distribution histograms of horizontal edges on two directions and an angle distribution histogram of a normal direction of pixels in the grayscale image with a grayscale value greater than the calculated road grayscale value;
   performing a matching of angles corresponding to peak values in the angle distribution histograms so as to obtain matched angles; and
   performing a straight line fitting for corresponding pixels based on the matched angles, and outputting the fitted straight line as the detected lane.

2. The method for detecting a plurality of lanes according to claim 1, wherein the step of calculating angle distribution histograms of horizontal edges on two directions of pixels in the grayscale image with a grayscale value greater than the calculated road grayscale value, includes the steps of
   determining an interest region from the grayscale image, and
   calculating a horizontal edge histogram of 0 to 180 degrees and a horizontal edge histogram of 180 to 360 degrees, for the pixels in the interest region with a grayscale value greater than the calculated road grayscale value.

3. The method for detecting a plurality of lanes according to claim 1 or 2, wherein the step of calculating the angle distribution histogram of the normal direction of pixels in the grayscale image with a grayscale value greater than the calculated road grayscale value, includes a step of
   calculating a grayscale difference histogram of 0 to 180 degrees of differences of pixels on both sides in the normal directions, for the pixels in the interest region with a grayscale value greater than the calculated road grayscale value.

4. The method for detecting a plurality of lanes according to claim 2, wherein the step of calculating the horizontal edge histogram of 0 to 180 degrees, includes
   calculating horizontal edge values and vertical edge values based on a Sobel operator, for the pixels in the interest region with a grayscale value greater than the calculated road grayscale value,
   calculating edge directions within 0 to 360 degrees for the pixels,
   accumulating the horizontal edge values of all of the pixels with the same edge direction angle, for each of the edge direction angles within 0 to 180 degrees, and
   generating the horizontal edge histogram of 0 to 180 degrees, for all of the pixels in the interest region with a grayscale value greater than the calculated road grayscale value.

5. The method for detecting a plurality of lanes according to claim 2 or 4, wherein the step of calculating the horizontal edge histogram of 180 to 360 degrees, includes
   calculating horizontal edge values and vertical edge values based on a Sobel operator, for the pixels in the interest region with a grayscale value greater than the calculated road grayscale value,
   calculating edge directions within 0 to 360 degrees for the pixels,
   accumulating the horizontal edge values of all of the pixels with the same edge direction angle, for each of the edge direction angles within 180 to 360 degrees, and
   generating the horizontal edge histogram of 180 to 360 degrees, for all of the pixels in the interest region with a grayscale value greater than the calculated road grayscale value.

6. The method for detecting a plurality of lanes according to claim 3, wherein the step of calculating a grayscale difference histogram of 0 to 180 degrees of differences of pixels on both sides in the normal directions for the pixels in the interest region with a grayscale value greater than the calculated road grayscale value, includes
   calculating horizontal edge values and vertical edge values based on a Sobel operator, for the pixels in the interest region with a grayscale value greater than the calculated road grayscale value,
   calculating edge directions within 0 to 360 degrees for the pixels,
   calculating grayscale differences of the normal directions perpendicular to the edge directions for the pixels,
accumulating the grayscale differences of the normal directions of the pixels with the same edge direction, for each of the edge directions within 0 to 180 degrees and each of the directions of subtracting 180 degrees from the edge directions within 180 to 360 degrees, with respect to the pixels in the interest region with a grayscale value greater than the calculated road grayscale value, and
generating the grayscale difference histogram of 0 to 180 degrees, for all of the pixels in the interest region with a grayscale value greater than the calculated road grayscale value.

7. The method for detecting a plurality of lanes according to any one of claims 1 to 6, wherein the step of calculating the road grayscale value based on the road region, includes
getting statistics of grayscale values of all of the pixels within the road region, and generating a grayscale histogram of the road region, and
obtaining a grayscale value corresponding to a peak value of the grayscale histogram as the road grayscale value.

8. The method for detecting a plurality of lanes according to any one of claims 1 to 7, wherein the step of performing the matching of the angles corresponding to the peak values in the angle distribution histograms so as to obtain the matched angles, includes
calculating peak values of the angle distribution histograms of horizontal edges on two directions and the angle distribution histogram of the normal direction,
obtaining angles corresponding to the peak values of the histograms,
performing the matching of the values of the corresponding angles within a predetermined error range, and
outputting the matched angles.

9. The method for detecting a plurality of lanes according to any one of claims 1 to 8, wherein the step of performing the straight line fitting for the corresponding pixels based on the matched angles, includes
retaining only pixels with an edge direction close to the matched angles, and
obtaining a line segment closest to the matched angles from the retained pixels by a Hough transform.

10. A system for detecting a plurality of lanes based on a two-edge limitation, the system comprising:

a grayscale image generation module configured to pick up an image in front of a vehicle, and output a grayscale image;
a road grayscale value calculation module configured to position a road region in the inputted grayscale image, and calculate a road grayscale value based on the road region;
an angle distribution histogram generation module configured to calculate angle distribution histograms of horizontal edges on two directions and an angle distribution histogram of a normal direction of pixels in the grayscale image with a grayscale value greater than the calculated road grayscale value;
an angle matching module configured to perform a matching of angles corresponding to peak values in the angle distribution histograms so as to obtain matched angles; and
a straight line fitting module configured to perform a straight line fitting for corresponding pixels based on the matched angles, and output the fitted straight line as the detected lane.

11. The system for detecting a plurality of lanes according to claim 10, wherein the angle distribution histogram generation module
determines an interest region from the grayscale image, and
calculates a horizontal edge histogram of 0 to 180 degrees and a horizontal edge histogram of 180 to 360 degrees, for the pixels in the interest region with a grayscale value greater than the calculated road grayscale value.

12. The system for detecting a plurality of lanes according to claim 10 or 11, wherein the angle distribution histogram generation module
calculates a grayscale difference histogram of 0 to 180 degrees of differences of pixels on both sides in the normal directions, for the pixels in the interest region with a grayscale value greater than the calculated road grayscale value.

13. The system for detecting a plurality of lanes according to claim 11, wherein the angle distribution histogram generation module
calculates horizontal edge values and vertical edge values based on a Sobel operator, for the pixels in the interest region with a grayscale value greater than the calculated road grayscale value,
calculates edge directions within 0 to 360 degrees for the pixels,
accumulates the horizontal edge values of all of the pixels with the same edge direction angle, for each of the edge direction angles within 0 to 180 degrees, and
generates the horizontal edge histogram of 0 to 180 degrees, for all of the pixels in the interest region with a grayscale value greater than the calculated road grayscale value.

14. The system for detecting a plurality of lanes according to claim 11 or 13, wherein the angle distribution histogram generation module

calculates horizontal edge values and vertical edge values based on a Sobel operator, for the pixels in the interest region with a grayscale value greater than the calculated road grayscale value,

calculates edge directions within 0 to 360 degrees for the pixels,

accumulates the horizontal edge values of all of the pixels with the same edge direction angle, for each of the edge direction angles within 180 to 360 degrees, and

generates the horizontal edge histogram of 180 to 360 degrees, for all of the pixels in the interest region with a grayscale value greater than the calculated road grayscale value.

15. The system for detecting a plurality of lanes according to claim 12, wherein the angle distribution histogram generation module

calculates horizontal edge values and vertical edge values based on a Sobel operator, for the pixels in the interest region with a grayscale value greater than the calculated road grayscale value,

calculates edge directions within 0 to 360 degrees for the pixels,

calculates grayscale differences of the normal directions perpendicular to the edge directions for the pixels,

accumulates the grayscale differences of the normal directions of the pixels with the same edge direction, for each of the edge directions within 0 to 180 degrees and each of the directions of subtracting 180 degrees from the edge directions within 180 to 360 degrees, with respect to the pixels in the interest region with a grayscale value greater than the calculated road grayscale value, and

generates the grayscale difference histogram of 0 to 180 degrees, for all of the pixels in the interest region with a grayscale value greater than the calculated road grayscale value.

# FIG.1

```
            ┌─────────┐
            │  START  │
            └────┬────┘
                 │
                 ▼
   ╱─────────────────────────────────╱
  ╱  S11 RECEIVING GRAYSCALE IMAGE  ╱
 ╱─────────────────────────────────╱
                 │
                 ▼
   ┌─────────────────────────────────┐
   │       S12 CALCULATING ROAD      │
   │        GRAYSCALE VALUE          │
   └─────────────────────────────────┘
                 │
                 ▼
   ┌─────────────────────────────────┐
   │   S13 CALCULATING A PLURALITY OF │
   │   ANGLE DISTRIBUTION HISTOGRAMS  │
   └─────────────────────────────────┘
                 │
                 ▼
   ┌─────────────────────────────────┐
   │   S14 PERFORMING ANGLE MATCHING  │
   │   AMONG DISTRIBUTION HISTOGRAMS  │
   └─────────────────────────────────┘
                 │
                 ▼
   ┌─────────────────────────────────┐
   │    S15 PERFORMING STRAIGHT LINE  │
   │   FITTING BASED ON MATCHED ANGLE │
   └─────────────────────────────────┘
                 │
                 ▼
   ╱─────────────────────────────────╱
  ╱  S16 OUTPUTTING DETECTED ROAD   ╱
 ╱─────────────────────────────────╱
                 │
                 ▼
            ┌─────────┐
            │   END   │
            └─────────┘
```

# FIG.2

START

S11 RECEIVING GRAYSCALE IMAGE

S121 POSITIONING ROAD REGION

S122 CALCULATING GRAYSCALE
HISTOGRAM OF ROAD REGION

S123 CALCULATING MAXIMUM
VALUE OF HISTOGRAM

S124 OUTPUTTING GRAYSCALE VALUE
CORRESPONDING TO MAXIMUM VALUE

END

FIG.3A

FIG.3B

# FIG.4A

QUANTITY

GRAYSCALE
0                           255 VALUE

# FIG.4B

QUANTITY

GRAYSCALE
VALUE
0                           255

# FIG.5

START

S131 INPUTTING GRAYSCALE IMAGE
AND ROAD GRAYSCALE VALUE

S132 POSITIONING TARGET REGION

S133 CALCULATING HORIZONTAL EDGE
HISTOGRAM OF 0-180 DEGREES

S134 CALCULATING HORIZONTAL EDGE
HISTOGRAM OF 180-360 DEGREES

S135 CALCULATING GRAYSCALE DIFFERENCE
HISTOGRAM OF 0-180 DEGREES

S136 OUTPUTTING ANGLE
DISTRIBUTION HISTOGRAM

END

## FIG.6

## FIG.7A

Σ INTENSITY

0        ANGLE        180

## FIG.7B

Σ INTENSITY

180        ANGLE        360

## FIG.7C

Σ GRAYSCALE

0        ANGLE        180

FIG.8

```
                    ┌─────────────┐
                    │    START    │
                    └──────┬──────┘
                           ▼
        ╱ S1331 INPUTTING GRAYSCALE IMAGE ╱
       ╱    AND ROAD GRAYSCALE VALUE     ╱
                           ▼
        ┌─────────────────────────────────┐
        │ S1332 CALCULATING HORIZONTAL EDGE│
        │   VALUE AND VERTICAL EDGE VALUE  │
        └─────────────────┬───────────────┘
                          ▼
        ┌─────────────────────────────────┐
        │ S1333 CALCULATING EDGE DIRECTION │
        │    OF PIXELS (0-360 DEGREES)     │
        └─────────────────┬───────────────┘
                          ▼
        ┌─────────────────────────────────┐
        │ S1334 ACCUMULATING HORIZONTAL EDGE│
        │   INTENSITY OF ALL PIXELS FOR EACH│
        │     ANGLE WITHIN 0-180 DEGREES    │
        └─────────────────┬───────────────┘
                          ▼
        ╱ S1335 OUTPUTTING HORIZONTAL EDGE ╱
       ╱   HISTOGRAM OF 0-180 DEGREES     ╱
                          ▼
                   ┌─────────────┐
                   │     END     │
                   └─────────────┘
```

FIG.9

```
                    ┌─────────────┐
                    │    START    │
                    └──────┬──────┘
                           ▼
        ╱ S1341 INPUTTING GRAYSCALE IMAGE ╱
       ╱    AND ROAD GRAYSCALE VALUE     ╱
                           ▼
        ┌─────────────────────────────────┐
        │   S1342 CALCULATING HORIZONTAL   │
        │ EDGE VALUE AND VERTICAL EDGE VALUE│
        └─────────────────┬───────────────┘
                          ▼
        ┌─────────────────────────────────┐
        │ S1343 CALCULATING EDGE DIRECTION │
        │    OF PIXELS (0-360 DEGREES)     │
        └─────────────────┬───────────────┘
                          ▼
        ┌─────────────────────────────────┐
        │ S1344 ACCUMULATING HORIZONTAL EDGE│
        │   INTENSITY OF ALL PIXELS FOR EACH│
        │    ANGLE WITHIN 180-360 DEGREES   │
        └─────────────────┬───────────────┘
                          ▼
        ╱ S1345 OUTPUTTING HORIZONTAL EDGE ╱
       ╱   HISTOGRAM OF 180-360 DEGREES   ╱
                          ▼
                   ┌─────────────┐
                   │     END     │
                   └─────────────┘
```

FIG.10

START

S1351 INPUTTING GRAYSCALE IMAGE
AND ROAD GRAYSCALE VALUE

S1352 CALCULATING HORIZONTAL EDGE
VALUE AND VERTICAL EDGE VALUE

S1353 CALCULATING EDGE DIRECTION
OF PIXELS (0-360 DEGREES)

S1354 CALCULATING DIFFERENCE OF GRAYSCALE
VALUE BETWEEN PIXELS ON BOTH SIDES IN EDGE
NORMAL DIRECTION FOR EACH OF PIXELS

S1355 ACCUMULATING GRAYSCALE DIFFERENCES
OF NORMAL DIRECTION OF ALL PIXELS FOR
EACH ANGLE WITHIN 0-180 DEGREES

S1356 OUTPUTTING GRAYSCALE DIFFERENCE
HISTOGRAM OF 0-180 DEGREES

END

FIG.11

START

S141 INPUTTING THREE ANGLE
DISTRIBUTION HISTOGRAMS

S142 CALCULATING PEAK
VALUES OF HISTOGRAMS

S143 OBTAINING ANGLES
CORRESPONDING TO PEAK VALUES

S144 PERFORMING MATCHING OF ANGLES

S145 OUTPUTTING MATCHED ANGLE

END

FIG.12

EP 2 759 959 A2

# FIG.13

```
        ┌─────────────┐
        │    START    │
        └──────┬──────┘
               │
               ▼
    ╱─────────────────────────╲
   ╱  S151 INPUTTING MATCHED    ╲
  ╱    ANGLE AND HISTOGRAM       ╱
 ╱─────────────────────────────╱
               │
               ▼
    ┌─────────────────────────┐
    │  S152 PERFORMING MATCHING │
    │ BETWEEN EDGE DIRECTION OF EACH │
    │  OF PIXELS AND INPUT ANGLE │
    └─────────────┬───────────┘
                  │
                  ▼
    ┌─────────────────────────┐
    │ S153 OBTAINING MATCHED PIXELS │
    └─────────────┬───────────┘
                  │
                  ▼
    ┌─────────────────────────┐
    │  S154 FITTING MATCHED PIXELS TO │
    │ STRAIGHT LINE BY HOUGH TRANSFORM │
    └─────────────┬───────────┘
                  │
                  ▼
  ╱─────────────────────────────╲
 ╱ S155 OUTPUTTING FITTED STRAIGHT LINE ╱
 ╲─────────────────────────────╱
               │
               ▼
        ┌─────────────┐
        │     END     │
        └─────────────┘
```

FIG.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7646890 B2

- US 7583816 B2

### Non-patent literature cited in the description

- A Machine Vision System for Lane-Departure Detection. *Computer Vision and Image Understanding,* 2002, vol. 86, 52-78